# EUROPEAN PATENT APPLICATION

(11) **EP 1 674 373 A2**
(43) Date of publication of application: **28.06.2006**
(21) Application number: 05380274.0
(22) Date of filing: 21.12.2005
(51) Int. Cl.: B62B 9/10, B62B 7/06

(54) **Blocking and releasing device of the structure of strollers and carriers for dolls**

(30) Priority: 22.12.2004 ES 200402888 U
(71) Applicant: Juguetes Pico, S.A., 03440 Ibi (Alicante) (ES)
(72) Inventor: Cañizares Montón, Pablo, 03440 Ibi (Alicante) (ES)
(74) Representative: Ungria Lopez, Javier

(57) **Abstract**

It has a top part (3) integral to a tray (2) and provided with a first cavity, which the center part of a bar (7) whose ends connect with the back legs (8) of the stroller or carrier (1) passes through. Furthermore, this top part (3) has a second cavity for the housing of a fastening rivet (5) and the device is completed with a bottom part (4) that is provided with a part that closes the cited cover-type cavity that prevents the bar (7) from coming out, and this bottom part (4) is provided with a housing for the head of the rivet (5) which a groove that allows a coin to be inserted, passes through.

## Description

As expressed in the title of this specification, the present invention refers to a blocking and releasing device of the structure of strollers and carriers for dolls, whose essential purpose consists of providing great ease by means of a coin the blocking as well as the releasing of the structure. Therefore, the cited structure can be folded up and then the stroller or carrier can be folded up. For this purpose, the invention provides a very simple, low cost and highly functional device.

### BACKGROUND OF THE INVENTION

Strollers and carriers for dolls, which despite their small size, take up too much room for transport and storage thereof as well as for storing the toy when it is not to be used, are known. On the other hand, many of the blocking and releasing devices for the folding of strollers and carriers are complex to use and thus require specific tools to be used or they are much too complex.

On the other hand, we have knowledge of foldable strollers and carriers for dolls whose folding mechanism is operable with coins, but they have the drawback that the parts of the mechanism are separable which implies dangers for users thereof.

In the current prior art we have no knowledge of any device, which facilitates blocking and releasing of the trays of strollers and carriers for dolls with such simple and efficient means as those provided by this invention.

### DESCRIPTION OF THE INVENTION

In order to achieve the objectives and avoid the drawbacks indicated above, the invention consists of a blocking and releasing device of the structure of strollers and carriers for dolls that also provide immobility of the corresponding bottom tray of the carrier.

In a novel manner, according to the invention, the device hereof has a top part integral to the cited tray and provided with a first cavity, which the center part of a bar whose ends connect with the back legs of the stroller or carrier, passes through. This bottom part is also provided with a housing for the head of the rivet which a groove that allows a coin to be inserted, passes through. Hence, when the coin is inserted the bottom part that opens the cited first cavity is caused to turn. The cited top and bottom parts are kept connected, thus allowing the folding of the tray and the rest of the carrier, and the permanent connection of all the parts thereof.

In the preferred embodiment of the invention, the cited bottom part has a slanted side wall that facilitates the sliding of the user's fingers, requiring the user to use the cited coin.

With the shape that has been described, the blocking and releasing device of structures of strollers and carriers of the invention has the main advantage that the simplicity and reliability thereof allow the device to be used on dolls' strollers and carriers facilitating the folding up of the structure thereof with some harmless and non-dismountable. Thus the optimization of the space that the toy takes up and the sureness of the safety in the use thereof are used.

Hereinafter to provide a better understanding of this specification and forming an integral part thereof, some figures wherein the object of the invention has been represented in an illustrative and non-restrictive manner are attached hereto.

### BRIEF DESCRIPTION OF THE FIGURES

Figure 1 is a perspective exploded view of a blocking and releasing device of the structure of strollers and carriers for dolls made in accordance with the present invention.
Figure 2 is a perspective view of the device of preceding figure 1, all the parts thereof being assembled and the device being in the blocked condition.
Figure 3 is a perspective view of the preceding figures, all the parts thereof being assembled and the device being in the open or release position thereof.
Figure 4 is a profile, sectional and exploded view of the device of the invention with slight constructive variations with respect to that which is shown in the three preceding figures.
Figure 5 is a profile, sectional view and with the components assembled of the device of the preceding figure 4, the device being in its open position.

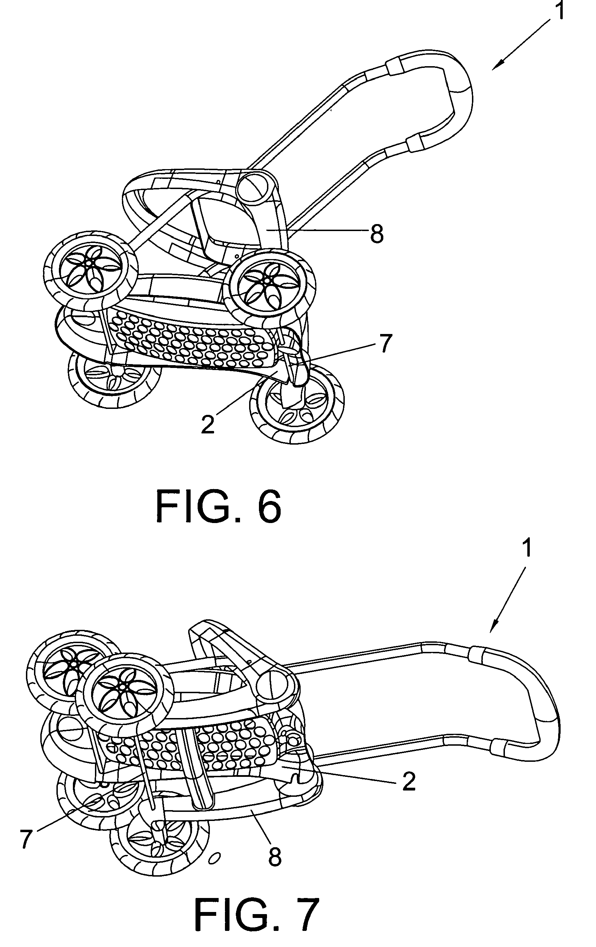

Figure 6 is a perspective view of a toy carrier wherein the device of the preceding figures is used, the carrier being completely assembled and unfolded.
Figure 7 is a perspective view of the preceding figure 6, the carrier being in its folded up position.

### DESCRIPTION OF AN EMBODIMENT OF THE INVENTION

A description of an embodiment of the invention, referring to the numbers used in the figures, is made hereinafter.

Hence, the blocking and releasing device of structures of strollers and carriers for dolls of this embodiment of the invention has two basic parts, a top part 3 and a bottom part 4.

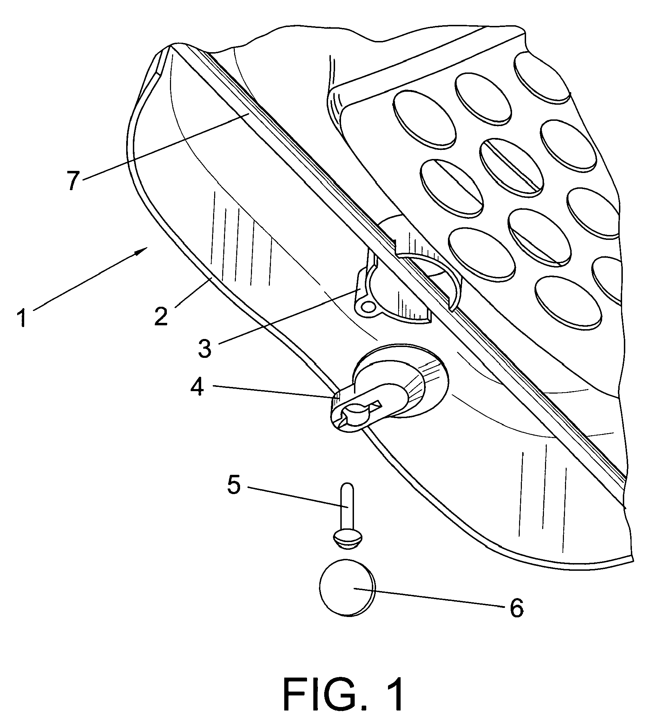

The top part 3 is in the bottom part of the corresponding tray 2, forming part thereof. This top part 3 has a first cavity through which the center part of a bar 7 passes, as shown in figure 1.

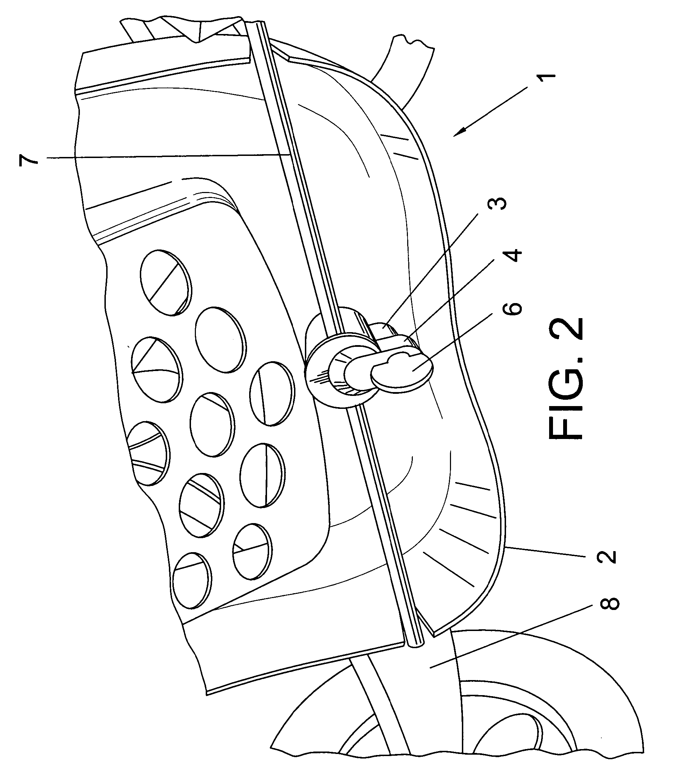

The ends of this bar 7 connect with the back legs 8 of the stroller or carrier 1, as shown in figure 2.

As one can see in figure 1, the top part 3 also includes, a second cavity much smaller than the first one and which is provided for housing a fastening rivet 5. This rivet 5 is inserted at the factory, in such a way that the assembly of all the parts that is fastened cannot be disassembled. The rotation resistance of the rivet 5, that is going to determine the unblocking resistance of the device, is defined by the tightening of this rivet. Said tightening is gauged at the factory in such a way that the user cannot turn the device by hand.

The other basic part of the device of this embodiment, in other words, the bottom part 4, is a type of small tiltable plate wherein the tilting shaft is the cited rivet 5. Hence, part 4 has one part that closes the cited first cover-type cavity, preventing the bar 7 from coming out. Besides, this bottom part 4 has a housing for the head of the rivet 5 through which a groove passes in order to allow insertion of a coin 6, that facilitates rotation of the bottom part 4, as one can especially see well in figures 1. to 3.

In this embodiment of the invention, the bottom part 4 has a slanted side wall so that the fingers of the user slide and the user has not alternative but to use a suitable tool, in other words, the coin 6. Hence, this contributes to the device being more harmless especially when children use it.

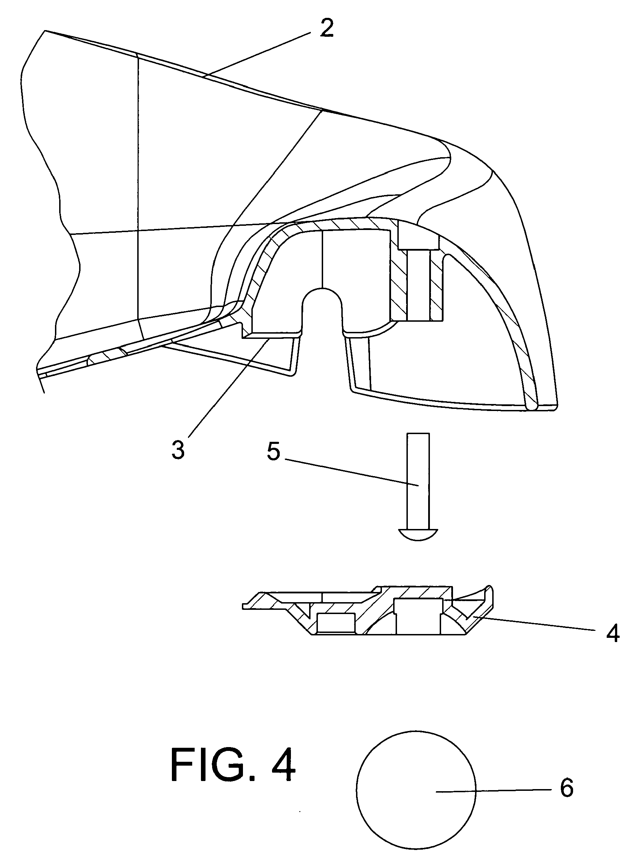

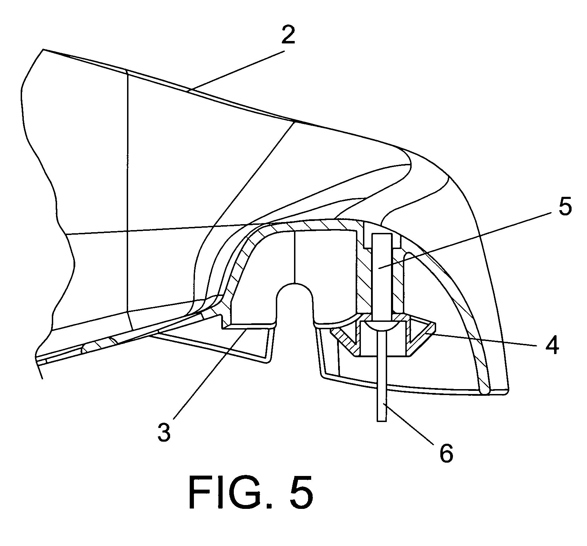

Besides, the bottom part 4 can include a recess so that less material is required, as, for example, in the case of figures 4 and 5.

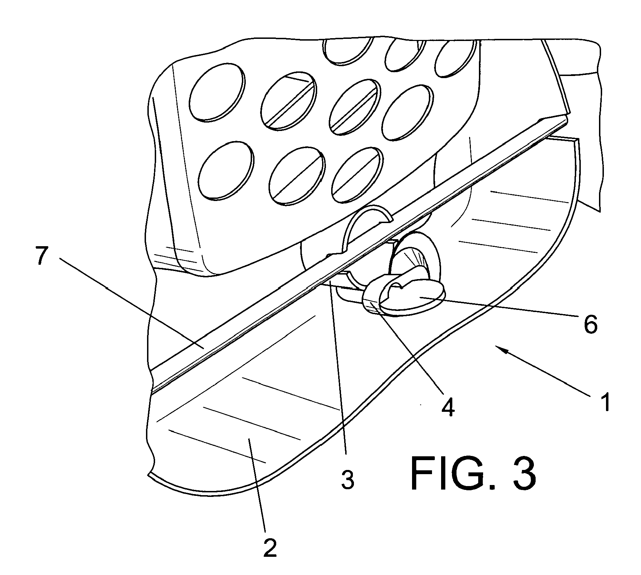

The building details can be seen better in these figures 4 and 5, although functionally there is no difference with respect to the device of figures 1 to 3.

In order to open the device of the present embodiment, it suffices to insert a coin in the groove that passes through the housing of the above-cited bottom part 4, in such a way that turning the coin 6 approximately 90°, the movement of the bottom part 4 is produced and the first cavity of the top part 3, is released. Therefore, the tray 2 can be removed from the bar 7 and collapsed for the folding up of the stroller or carrier 1. The stroller or carrier 1 can be assembled with this same simplicity and the device can be blocked with the corresponding operations reverse to those described for the release thereof.

## Claims

1. Blocking and releasing device of the structure of strollers and carriers for dolls, that make it possible to provide immobilization of the corresponding tray (2),
**characterized in that** it has a top part (3) integral to said tray (2) and provided with a first cavity which the center part of a bar (7) whose ends connect with the back legs (8) of the stroller or carrier (1) passes through this top part (3) also having a second cavity for housing a fastening rivet (5), the device being completed with a bottom part (4) that is provided with a part that closes the cited cover-type first cavity that prevents the bar (7) from coming out, and this bottom part (4) also being provided with a housing for the head of the rivet (5) that a groove that allows insertion of a coin (6) passes through; in such a way that when the coin (6) is inserted the bottom part (4) that opens the cited first cavity is caused to turn, the cited top (3) and bottom (4) parts being kept connected, thus allowing the folding of the tray (2) and the rest of the carrier (1), and the permanent connection of all the parts thereof.

2. Blocking and releasing device of the structure of strollers and carriers for dolls, according to claim 1,
**characterized in that** the cited bottom part (4) has a slanted side wall that facilitates the sliding of the fingers of the user, requiring the user to use the cited coin.
